# EUROPÄISCHE PATENTSCHRIFT

(11) **EP 0 811 418 B1**
(45) Veröffentlichungstag und Bekanntmachung des Hinweises auf die Patenterteilung: **27.11.2002**
(21) Anmeldenummer: 97107058.6
(22) Anmeldetag: 29.04.1997
(51) Int. Cl.: B01D 53/88, B01D 53/94, B01J 23/08, B01J 23/50

(54) **Abgaskatalysator**
Exhaust gas catalyst
Catalysateur pour gaz d'échappement

(30) Priorität: 06.06.1996 DE 19622789; 17.03.1997 DE 19710778
(43) Veröffentlichungstag der Anmeldung: 10.12.1997
(73) Patentinhaber: Volkswagen Aktiengesellschaft, 38436 Wolfsburg (DE)
(72) Erfinder: Richter, Thomas, Dipl.-Chem., 38448 Wolfsburg (DE); König, Axel, Dr., 38448 Wolfsburg (DE)
(74) Vertreter: Schneider, Henry, Dipl.-Ing.

(56) Entgegenhaltungen:
- EP-A- 0 664 147
- EP-A- 0 697 240
- JP-A- 8 042 329
- DATABASE WPI Week 9617 Derwent Publications Ltd., London, GB; AN 96-167865 XP002054505 & JP 08 049 533 A (NISSAN DIESEL KOGYO KK) , 20.Februar 1996

## Beschreibung

Die Erfindung betrifft ein Verfahren zur Reduktion von Stickoxiden gemäß dem Oberbegriff des Anspruchs 1 sowie eine Katalysatoranordnung gemäß dem Oberbegriff des Anspruchs 8.

Die JP 80 49 533 A und JP 80 42 329 A beschreiben NO_{X}-Abgaskatalysatorsysteme, bei denen im Strömungsweg des Abgases zunächst ein erster Katalysator zur Oxidation von NO_{X} zu NO₂ und nachfolgend ein zweiter Katalysator zur Reduktion von NO₂ zu Stickstoff (N₂) geschaltet ist. Nachteilig an dieser Anordnung sind der erhöhte Bauraumbedarf und die damit verbundenen Kosten. Art und stoffliche Zusammensetzung der beiden Katalysatoren werden in diesen Schriften nicht beschrieben.

Aus der EP-A-0.697.240 ist ferner ein Gallium-Silber-haltiger Abgaskatalysator bekannt, der geeignet ist, Stickoxide in Gegenwart von Sauerstoff und Kohlenwasserstoffen umzusetzen. Die Umsetzungsraten sind bei künstlichen Abgaszusammensetzungen sehr hoch. Grundsätzlich ist dieser Katalysator geeignet zur Stickoxidreduktion bei mageren Ottomotoren bzw. bei Dieselmotoren.

Aus dem LKW-Bereich, insbesondere bei dieselbetriebenen Stadtbussen von MAN bzw. Mercedes Benz, ist es bekannt, dass in den Fahrzeugabgasen, die erst einen Oxidationskatalysator durchströmen, in dem bei Temperaturen zwischen 200 °C bis 600 °C die Schadstoffe Kohlenmonoxid und Kohlenwasserstoffe fast vollständig oxidiert werden, vermehrt Stickstoffdioxid auftritt. Das hierbei nach dem Oxidationskatalysator vermehrt auftretende Stickstoffdioxid verbindet sich im nachgeschalteten Rußfilter mit dem dortigen Kohlenstoff zu Kohlendioxid, wobei gleichzeitig wieder NO entsteht. Hierdurch werden Temperaturspitzen beim Abbrand des Rußes im Rußfilter vermieden, wobei jedoch keine wesentliche Reduktion der Stickoxide stattfindet.

Aufgabe der vorliegenden Erfindung ist es, ein Verfahren und Vorrichtungen zur Verfügung zu stellen, mittels denen unter den Betriebsbedingungen eines Kraftfahrzeuges eine gute Reduktion von Stickoxiden erreicht wird. Das Verfahren und die Vorrichtung sollen ferner möglichst geringen Bauraum und Kosten beanspruchen.

Diese Aufgabe wird hinsichtlich des Verfahrens gelöst mit den Maßnahmen des Anspruchs 1.

Hinsichtlich der Vorrichtungen wird die Aufgabe gelöst mit den Merkmalen des Anspruchs 8.

Erfindungsgemäß kommt ein Stickoxidkatalysator zum Einsatz, wie er in der eingangs erwähnten EP-A-0.697.240 beschrieben ist. Die katalytischen Komponenten Gallium und Silber sind vorzugsweise auf einem Zeolithen untergebracht, wobei übliche Techniken, wie beispielsweise ein Eintausch, zum Einsatz kommen. Als Zeolith eignen sich insbesondere solche, die ein Si/Al-Verhältnis von ≥ 2 haben. Als Strukturen für den Zeolith eignen sich beispielsweise BEA, MFI, MOR, FER, usw., besonders geeignet sind ZSM-Zeolithen. Der Anteil an Silber und Gallium beträgt vorteilhaft jeweils 0,1 bis 10 % bezogen auf das Gewicht des Zeolithen, daneben kann der Zeolith auch andere Metalle (eingetauscht) enthalten. Das Gallium und das Silber können als neutrale Komponente oder auch als Oxide oder in sonstiger Weise (ionogen) an dem Zeolithen gebunden sein. Beispielsweise lassen sich die Metalle in Form ihrer Nitrate mit dem Zeolithen in Verbindung bringen. Gemäß einem anderen Verfahren können die Metalle auch bei der Herstellung (Kristallisation) des Zeolithen in diesen eingebaut werden. Auch eine Kombination dieser Verfahren ist möglich. Die Zeolithe können außerdem noch neutralisiert oder mit weiteren Elementen beladen werden, beispielsweise mittels H⁺, Ammonium, Alkalimetallen, Erdalkalimetallen oder Seltenerdmetallen. Entsprechende Techniken sind beispielsweise in der EP 0 327 764 B1 beschrieben, auf die hier Bezug genommen wird.

Wie in der EP weiter ausgeführt, kann die Katalysatorzusammensetzung beispielsweise auch ein Bindemittel enthalten bzw. auch einer Aktivierung unterzogen werden.

Die Erfindung nutzt aus, dass der Gallium-Silber-Katalysator zwar insgesamt eine gute NO_{X}-Reduktion hat, aber deutlich unterschiedliche Umsetzungsraten für einzelne Stickoxide. So wurde festgestellt, dass die Umsetzungsrate für NO₂, insbesondere beim Einsatz des Katalysators mit Abgasen von Brennkraftmaschinen, um den Faktor 2 bis 4 höher ist als die Umsetzungsrate von NO. Entsprechend dieser Erkenntnis wird gemäß der vorliegenden Erfindung nicht versucht, die Aktivitäten des Katalysators hinsichtlich NO noch zu steigern, sondern es wird dem Gallium-Silber-Katalysator eine NO_{X}-Behandlung vorgeschaltet, in der das NO₂/NO-Verhältnis in den Abgasen vergrößert wird. Hierdurch wird dem Gallium-Silber-Katalysator diejenige Stickoxidform vermehrt zugeführt, die an dem Katalysator am besten umgesetzt wird. Für solche NO_{X}-Behandlungen eignen sich alle Verfahren, die eine Vergrößerung des NO₂-Anteils an den Stickoxiden bewirken, beispielsweise elektrische Entladungen im Abgassystem, bevorzugt Barriereentladungen sowie katalytische Verfahren, insbesondere Oxidationskatalysatoren, und hier wiederum vorzugsweise solche mit mindestens einem Element der Platingruppe, wobei wiederum Platin selbst besonders bevorzugt ist. Solche Katalysatoren finden bereits millionenfachen Einsatz in Kraftfahrzeugen, beispielsweise mit Beladungen von 10 g/ft³ bis 200 g/ft³. Als Katalysatorträger kommen hier übliche metallische oder keramische Strukturen - insbesondere Monolithe - zum Einsatz, beispielsweise Cordierit.

Wie bereits erwähnt, eignet sich die vorliegende Erfindung insbesondere zur Umsetzung von NO_{X} in Abgasen von Verbrennungskraftmaschinen, wobei bevorzugt Abgase von Dieselbrennkraftmaschinen bzw. von mager abgestimmten Ottomotoren umgesetzt werden. Das heißt, die NO_{X}-Umsetzung erfolgt vorteilhaft in Gegenwart von Sauerstoff.

Die NO_{X}-Reduktion sowie auch die NO_{X}-Behandlung erfolgt vorteilhaft in einem Temperaturfenster von 200 °C bis 400 °C, so dass die Lage des Katalysators im Abgasstrang so gewählt wird, dass beim Betrieb der Brennkraftmaschine überwiegend diese Temperatur vorliegt.

Besonders vorteilhaft erfolgt die Reduktion der Stickoxide an dem Gallium-Silber-Katalysator in Gegenwart von Kohlenwasserstoffen (HC), die bei dem vorliegenden Verfahren dem Abgas zugesetzt werden können. Dieses Zusetzen der Kohlenwasserstoffe kann beispielsweise durch Einspritzen von Kraftstoff in das Abgas erfolgen.

Erfindungsgemäß erfolgt die NO_{X}-Behandlung zur Vergrößerung des NO₂/NO-Verhältnisses praktisch fast am gleichen Ort wie die NO_{X}-Reduktion, jedoch zeitlich früher. Dies kann entweder auf einem double-layer-Katalysator durchgeführt werden. Ein solcher double-layer-Katalysator enthält zwei aktive Schichten, als Unterschicht eine NO_{X}-reduzierende Schicht aus Silber und Gallium, und eine Oberschicht aus einer oxidierend wirkenden Komponente, wie beispielsweise Platin. Es ist alternativ möglich, beide Schichten ineinander (gemischt) anzuordnen, so dass die oxidierend wirkende Komponente in unmittelbarer Nähe zur reduzierenden Silber-Gallium-Komponente angeordnet ist. Auch in diesem Fall findet die zweistufige Katalyse statt, in der zuerst NO zu NO₂ umgebildet und anschließend reduziert wird, obwohl sich die unterschiedlich wirkenden Komponenten nicht auf räumlich getrennten Monolithen (Katalysatorblöcken) befinden.

Die ebenfalls zu der Erfindung gehörende Katalysatoranordnung enthält neben dem Gallium-Silber-Katalysator vorgeschaltet einen Oxidationskatalysator bzw. einen mindestens ein Metall aus der Platingruppe enthaltenden Katalysator bzw. einen Katalysator, der NO zu NO₂ umsetzt. Wie bereits oben erwähnt, können diese drei Katalysatortypen gleichzeitig verwirklicht sein, wobei insbesondere platinhaltige Katalysatoren zum Einsatz kommen. Die einzelnen Merkmale des Verfahrens finden auch Anwendung bei dem Katalysator und umgekehrt.

Die Erfindung eignet sich insbesondere zur Verminderung der Stickoxidkonzentration im sauerstoffhaltigen Abgas verbrauchsoptimierter Motoren (Diesel- bzw. magerbetriebene Ottomotoren). Die beiden Katalysatoren, das heißt insbesondere der platinhaltige Oxidationskatalysator und der nachgeschaltete Gallium-Silber-Katalysator werden vorteilhaft mit den üblichen Katalysatorträgern eingesetzt. Als Oxidationskatalysator sind grundsätzlich alle platinhaltigen Trägerkatalysatoren geeignet, wobei dieser weitere katalytisch-aktive Komponenten enthalten kann. Geeignet sind beispielsweise Aluminiumoxid, Siliziumdioxid, Zeolithe, Perowskite, Pyrochlore als Träger bzw. Washcoat. Das Platin kann auch ionenausgetauschtes Platin in beispielsweise Zeolithen sein, wobei hier (wie beim Gallium-Silber-Katalysator) praktisch jede Zeolithstruktur zum Einsatz kommen kann. Ferner kann das Platin auch mit oder ohne Washcoat auf metallischen Oberflächen aufgebracht sein. Auch so genannte Drei-Wege-Katalysatoren, die beispielsweise Palladium und/oder Rhodium neben dem Platin enthalten, können eingesetzt werden.

Besonders vorteilhaft ist für die vorliegende Erfindung, wenn die NO_{X}-Behandlung bereits bei 200 °C deutlichen Umsatz bringt. Typische Platinkatalysatoren bewirken dies in sauerstoffhaltiger Atmosphäre, neben der Oxidation von Kohlenmonoxid und Kohlenwasserstoffen. An dem NO_{X}-Behandlungskatalysator kann auch insgesamt eine NO_{X}-Reduktion stattfinden, wobei diese jedoch gleichzeitig mit der Umsetzung von NO zu NO₂ einhergeht, so dass sich die beiden Katalysatoren synergistisch ergänzen, das heißt, die Gesamtreduktion von NO_{X} ist bei der erfindungsgemäßen Serienschaltung der Katalysatoren höher als die entsprechende Umsetzung an den einzelnen Katalysatoren.

Der der NO_{X}-Behandlung nachfolgende Gallium-Silber-Katalysator ist vorzugsweise ein mit Gallium-Silber ausgetauschter Zeolithkatalysator der auch bei Sauerstoffüberschuss in der Lage ist, neben NO insbesondere NO₂ zu Stickstoff zu reduzieren, wobei dies vorteilhaft in Gegenwart von Kohlenwasserstoffen erfolgt. Da die NO₂-Reduktion in erheblich stärkerem Maße erfolgt als die NO-Reduktion, ist die Wirksamkeit dieses Katalysators bzw. der Gesamt-NO_{X}-Minderung um so höher, je mehr die vorgeschaltete NO_{X}-Behandlung das NO₂/NO-Konzentrationsverhältnis zugunsten von NO₂ verschiebt.

Da die erfindungsgemäß eingesetzten Katalysatoren zwischen 200 °C und 400 °C besonders hohe Umsatzraten erzielen, kann die Erfindung besonders vorteilhaft an instationären Motoren (in Kraftfahrzeugen) zur NO_{X}-Verminderung im Abgas eingesetzt werden.

Die Erfindung wird im Folgenden anhand von Figuren näher beschrieben.

Es zeigen:
- Figur 1: eine NO_{X}-Behandlung und
- Figur 2: eine NO_{X}-Reduktion.

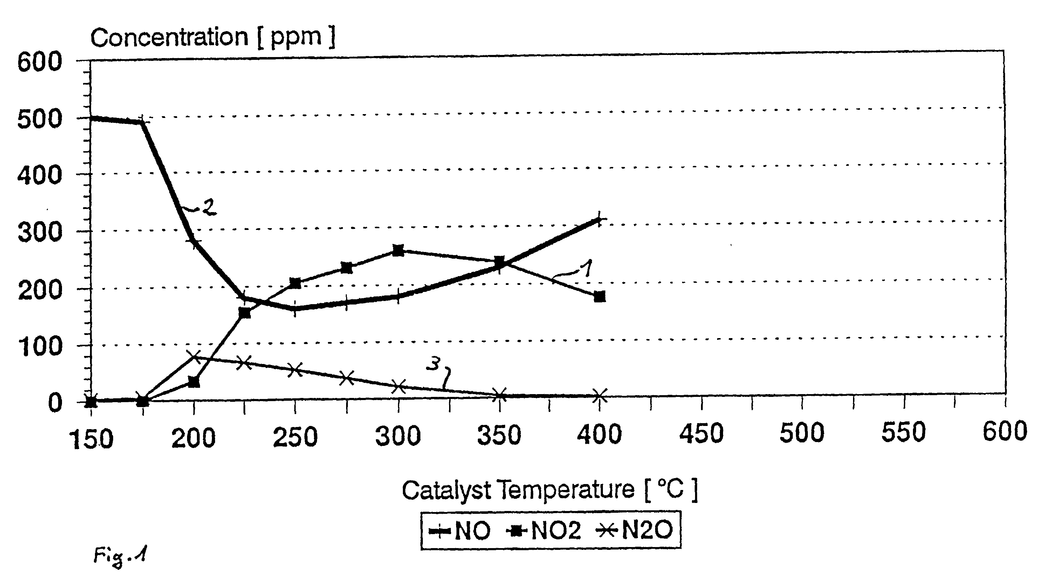

Die in Figur 1 dargestellte Umsetzung an Stickoxiden findet an einem Platinkatalysator statt, der 70 g Pt/ft³ auf einem Cordieritmonolithen enthält. Die Kohlenwasserstoffe im Abgas sind Kerosin.

### Versuchsbedingungen:

| | | |
|---|---|---|
| Gaszusammensetzung | Kohlendioxid | 10 % |
| | Kohlenmonoxid | 350 ppm |
| | Sauerstoff | 6 % |
| | Wasserdampf | 12 % |
| | Stickstoffmonoxid | 500 ppm |
| | Kohlenwasserstoff | 660 ppm C₃-Äquivalent |
| | Stickstoff | Rest |
| | | |
| HC₁/NO-Verhältnis | 660 ppm C₃/500 ppm NO = 1980 ppm C₁/500 ppm NO = 4 | |
| | | |
| Raumgeschwindigkeit | 30.000 h⁻¹ | |
| | | |
| Temperaturbereich | 150 - 400 °C | |
| | | |
| Probe | Trägerkatalysator, 400 cpi, 8 mil | |

Es ist deutlich zu erkennen, dass nach der NO_{X}-Behandlung (Oxidationskatalysator) innerhalb eines Temperaturfensters von 200 °C bis 400 °C das Stickstoffdioxid (Linie 1) einen erheblichen Anteil an der Gesamtkonzentration der Stickoxide hat, wobei die Konzentration an Stickstoffdioxid in dem wesentlichen Temperaturfenster von 250 °C bis 350 °C oberhalb der Konzentration an Stickstoffmonoxid (Linie 2) liegt. Die Konzentration an Lachgas (Linie 3) ist gering. Neben einer gewissen Reduktion der in diesen Katalysator gelangenden Stickoxide findet also eine deutliche Konvertierung von Stickstoffmonoxid zu Stickstoffdioxid statt, das von diesem Katalysator nur zu einem verhältnismäßig geringen Prozentsatz zu Stickstoff umgesetzt werden kann.

Solche bezüglich ihres relativen Anteils an den Stickoxiden mit NO₂ angereicherten Abgase gelangen in einen Zeolithkatalysator des Mordenittyps, der Silber und Gallium enthält (5 % Ag, 8 % Ga-H-MOR).

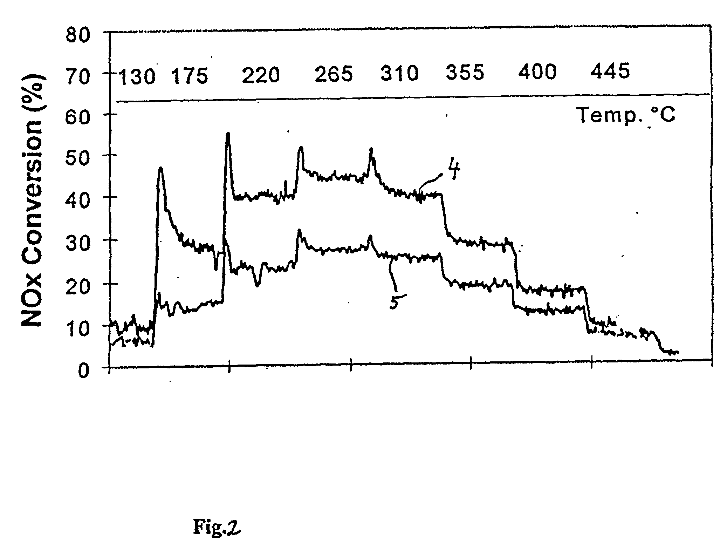

In Figur 2 ist dessen NO_{X}-Reduktion in Abhängigkeit von der Temperatur und der NO_{X}-Zusammensetzung dargestellt, wobei die Kurve 4 einem NO₂/NO-Verhältnis von 100 : 0 und die Kurve 5 einem Verhältnis von 25 : 75 entspricht. Bei einem noch höheren Anteil an NO nimmt die NO_{X}-Konvertierung stark ab. Hieraus ist zu erkennen, dass die NO_{X}-Reduktion an dem Gallium-Silber-Katalysator bei der Verwendung von Gasgemischen, wie sie in den Abgasen von Brennkraftmaschinen vorliegen, (unter Zugabe von Kohlenwasserstoffen) dann mit hohen Umsatzraten erfolgt, wenn das NO₂/NO-Verhältnis möglichst weit auf Seiten von NO₂ liegt, wobei ab ca. 15 bis 20 Vol.-% NO₂ im NO_{X} schon gute Umsatzraten erzielt werden. Mit dem vorgeschalteten Oxidationskatalysator wird erreicht, dass der Gallium-Silber-Katalysator ein für ihn im günstigen Bereich liegendes NO₂/NO-Verhältnis erhält.

## Patentansprüche

1. Verfahren zur Reduktion von NO_{X} aus Abgasen einer Verbrennungskraftmaschine, bei dem die Abgase über einen Gallium und Silber als katalytisch-aktive Komponenten enthaltenden Katalysator geführt werden, **dadurch gekennzeichnet, dass** die Abgase, bevor sie über den Gallium-Silber-Katalysator geführt werden, einer NO_{X}-Behandlung mittels einer oxidierend wirkenden Katalysatorkomponente unterzogen werden, mit der ein in den Abgasen vorliegendes NO₂/NO-Verhältnis vergrößert wird, und dass die NO_{X}-Behandlung an der oxidierend wirkenden Katalysatorkomponente und die NO_{X}-Reduktion an dem Gallium-Silber-Katalysator an einem gemeinsamen Katalysatorträger erfolgen, wobei der Katalysatorträger eine Unterschicht mit dem Silber-Gallium-Katalysator und eine Oberschicht mit der oxidierend wirkenden Komponente enthält oder wobei der Katalysatorträger eine gemischte Schicht aus dem Silber-Gallium-Katalysator und aus der oxidierend wirkenden Komponente enthält.

2. Verfahren nach Anspruch 1, **dadurch gekennzeichnet, dass** die NO_{X}-Behandlung zur Vergrößerung des NO₂/NO-Verhältnisses mittels eines Oxidationskatalysators durchgeführt wird.

3. Verfahren nach Anspruch 1 oder 2, **dadurch gekennzeichnet, dass** die NO_{X}-Behandlung mittels eines Katalysators durchgeführt wird, der mindestens ein Element der Platingruppe, insbesondere Platin, enthält.

4. Verfahren nach einem der vorhergehenden Ansprüche, **dadurch gekennzeichnet, dass** die Abgase mindestens 0,5 Vol.-%, insbesondere mindestens 2 Vol.-% O₂ enthalten.

5. Verfahren nach einem der vorhergehenden Ansprüche, **dadurch gekennzeichnet, dass** die NO_{X}-Reduktion zwischen 150 °C und 400 °C erfolgt.

6. Verfahren nach einem der vorhergehenden Ansprüche, **dadurch gekennzeichnet, dass** das Gallium und das Silber in oder an einem Zeolith immobilisiert sind.

7. Verfahren nach einem der vorhergehenden Ansprüche, **dadurch gekennzeichnet, dass** den Abgasen HC zugesetzt wird, bevor sie dem Katalysator zugeführt werden.

8. Katalysatoranordnung mit einem Gallium und Silber als katalytisch-aktive Komponenten enthaltenden Katalysator, **gekennzeichnet durch** einen dem Gallium-Silber-Katalysator vorgeschalteten Katalysator mit einer oxidierend wirkenden Katalysatorkomponente, der ein in einem Abgas vorliegendes NO₂/NO-Verhältnis vergrößert und der zusammen mit dem Gallium-Silber-Katalysator auf einem gemeinsamen Katalysatorträger angeordnet ist, wobei der Katalysatorträger eine Unterschicht mit dem Silber-Gallium-Katalysator und eine Oberschicht mit der oxidierend wirkenden Komponente enthält oder wobei der Katalysatorträger eine gemischte Schicht aus dem Silber-Gallium-Katalysator und aus der oxidierend wirkenden Komponente enthält.

9. Katalysatoranordnung nach Anspruch 8, **dadurch gekennzeichnet, dass** die oxidierend wirkende Katalysatorkomponente ein Oxidationskatalysator ist, insbesondere mindestens ein Element der Platingruppe umfasst.

10. Katalysatoranordnung nach einem der Ansprüche 8 oder 9, **dadurch gekennzeichnet, dass** sie einer Verbrennungskraftmaschine zugehörig ist.

11. Katalysatoranordnung nach einem der Ansprüche 8 bis 10, **dadurch gekennzeichnet, dass** das Gallium und das Silber in oder an einem Zeolithen immobilisiert sind.

12. Katalysatoranordnung nach einem der Ansprüche 8 bis 11, **gekennzeichnet durch** eine HC-Einspeisung, die dem Katalysator vorgeschaltet ist.

13. Katalysatoranordnung nach einem der Ansprüche 8 bis 12, **gekennzeichnet durch** eine Lage in einem Abgasstrang bei einer Abgastemperatur von 200 bis 400 °C.

## Claims

1. Process for the reduction of NOₓ in waste gases from a combustion engine, wherein the waste gases are passed over a catalyst containing gallium and silver as catalytically-active components, **characterised in that**, before they are passed over the gallium-silver-catalyst, the waste gases are subjected to a NOₓ treatment by means of an actively oxidising catalytic component, with which the NO₂/NO ratio present in the waste gases is increased, and that the NOₓ treatment on the actively oxidising catalytic component and the NOₓ reduction on the gallium-silver-catalyst take place on a shared catalyst-carrier, wherein the catalyst-carrier contains a lower layer with the silver-gallium-catalyst and an upper layer with the actively oxidising component or wherein the catalyst-carrier contains a mixed layer comprising the silver-gallium-catalyst and the actively oxidising component.

2. Process according to claim 1, **characterised in that** the NOₓ treatment to increase the NO₂/NO ratio is implemented by means of a oxidation catalyst.

3. Process according to claim 1 or 2, **characterised in that** the NOₓ treatment is implemented by means of a catalyst which contains at least one element from the platinum group, especially platinum.

4. Process according to any one of the preceding claims, **characterised in that the** waste gases contain at least 0.5% by volume, especially at least 2% by volume O₂.

5. Process according to any one of the preceding claims, **characterised in that** the NOₓ reduction takes place between 150°C and 400°C.

6. Process according to any one of the preceding claims, **characterised in that** the gallium and the silver are immobilised in or on a zeolite.

7. Process according to any one of the preceding claims, **characterised in that** HC is added to the waste gases before they are supplied to the catalyst.

8. Catalyst arrangement with a catalyst containing gallium and silver as the catalytically-active components, **characterised by** a catalyst with an actively oxidising catalytic component positioned before the gallium-silver catalyst, which increases a NO₂/NO ratio present in a waste gas and which is arranged together with the gallium-silver catalyst on a shared catalyst-carrier, wherein the catalyst-carrier contains a lower layer with the silver-gallium catalyst and an upper layer with the actively oxidising component or wherein the catalyst-carrier contains a mixed layer comprising the silver-gallium catalyst and the actively oxidising component.

9. Catalyst arrangement according to claim 8, **characterised in that** the actively oxidising catalytic component is an oxidation catalyst and, in particular, contains at least one element from the platinum group.

10. Catalyst arrangement according to any one of claims 8 or 9, **characterised in that** it is associated with a combustion engine.

11. Catalyst arrangement according to any one of claims 8 to 10, **characterised in that** the gallium and the silver are immobilised in or on a zeolite.

12. Catalyst arrangement according to any one of claims 8 to 11, **characterised by** the addition of a charge of HC before the catalyst.

13. Catalyst arrangement according to any one of claims 8 to 12, **characterised by** a location in a waste gas train with a waste gas temperature from 200 to 400°C.

## Revendications

1. Procédé de réduction des NOₓ issus des gaz d'échappement d'un moteur à combustion interne, dans lequel les gaz d'échappement sont amenés par un catalyseur contenant du gallium et de l'argent en tant que composants actifs sur le plan catalytique, **caractérisé en ce que** les gaz d'échappement, avant d'être amenés dans le catalyseur de gallium - argent, sont soumis à un traitement des NOₓ au moyen d'un composant de catalyseur agissant de façon oxydante, grâce auquel un rapport NO₂/NO existant dans les gaz d'échappement est augmenté, et **en ce que** le traitement des NOₓ au niveau du composant de catalyseur agissant de façon oxydante et la réduction des NOₓ au niveau du catalyseur de gallium - argent sont réalisés sur un support de catalyseur commun, le support de catalyseur contenant une couche inférieure comportant le catalyseur d'argent - gallium et une couche supérieure comportant le composant agissant de façon oxydante, ou le support de catalyseur contenant une couche mixte composée du catalyseur d'argent - gallium et du composant agissant de façon oxydante.

2. Procédé selon la revendication 1, **caractérisé en ce que** le traitement des NOₓ permettant d'augmenter le rapport NO₂/NO est réalisé au moyen d'un catalyseur à oxydation.

3. Procédé selon la revendication 1 ou 2, **caractérisé en ce que** le traitement des NOₓ est réalisé au moyen d'un catalyseur qui contient au moins un élément du groupe du platine, en particulier le platine.

4. Procédé selon l'une des revendications précédentes, **caractérisé en ce que** les gaz d'échappement contiennent au moins 0,5 % en volume, en particulier au moins 2 % en volume, de O₂.

5. Procédé selon l'une des revendications précédentes, **caractérisé en ce que** la réduction des NOₓ s'effectue entre 150 °C et 400 °C.

6. Procédé selon l'une des revendications précédentes, **caractérisé en ce que** le gallium et l'argent sont immobilisés dans ou sur une zéolite.

7. Procédé selon l'une des revendications précédentes, **caractérisé en ce que** l'on ajoute HC aux gaz d'échappement avant qu'ils soient amenés dans le catalyseur.

8. Dispositif à catalyseur comportant un catalyseur qui contient du gallium et de l'argent en tant que composants actifs sur le plan catalytique, **caractérisé par** un catalyseur placé en amont du catalyseur au gallium - argent, lequel présente un composant de catalyseur qui agit de façon oxydante, qui augmente un rapport NO₂/NO existant dans un gaz d'échappement et qui est disposé avec le catalyseur au gallium - argent sur un support de catalyseur commun, le support de catalyseur présentant une couche inférieure comportant le catalyseur d'argent - gallium et une couche supérieure comportant le composant agissant de façon oxydante, ou le support de catalyseur contenant une couche mixte composée du catalyseur d'argent - gallium et du composant agissant de façon oxydante.

9. Dispositif à catalyseur selon la revendication 8, **caractérisé en ce que** le composant de catalyseur qui agit de façon oxydante est un catalyseur à oxydation, qui comprend en particulier au moins un élément du groupe du platine.

10. Dispositif à catalyseur selon l'une des revendications 8 ou 9, **caractérisé en ce qu'**il appartient à un moteur à combustion interne.

11. Dispositif à catalyseur selon l'une des revendications 8 à 10, **caractérisé en ce que** le gallium et l'argent sont immobilisés dans ou sur une zéolite.

12. Dispositif à catalyseur selon l'une des revendications 8 à 11, **caractérisé par** une alimentation HC qui est prévue en amont du catalyseur.

13. Dispositif à catalyseur selon l'une des revendications 8 à 12, **caractérisé par** une position dans un segment des gaz d'échappement à une température des gaz d'échappement comprise entre 200 et 400 °C.
